# EUROPEAN PATENT APPLICATION

(11) **EP 1 018 574 A2**
(43) Date of publication of application: **12.07.2000**
(21) Application number: 99306717.2
(22) Date of filing: 24.08.1999
(51) Int. Cl.: D07B 1/06

(54) **Radial tyre with a carcass containing steel cord**

(30) Priority: 08.01.1999 KR 9900318
(71) Applicant: HANKOOK TIRE MFG. CO., LTD., Seoul (KR)
(72) Inventor: Han, Yong Sik, Yusung-Gu, Taejon (KR); Kim, Sang Goo, Yusung-Gu, Taejon (KR)
(74) Representative: Brunner, Michael John

(57) **Abstract**

The present invention relates to a radial tyre, to the carcass of which steel cord is applied, for a passenger car and light truck, in which the steel cord is formed by drawing carbon steel wherein the content of carbon is 0.70 ~ 0.96 weight % and plating brass on the surface of a filament. Each filament prior to stranding into steel cord is such that, in the case of a filament having a diameter of below 0.25mm the tensile strength level thereof is in the range of 260 ~ 375 kgf/mm², in the case of a filament having a diameter of 0.26 ~ 0.35mm the tensile strength level is in the range of 250 ~ 355 kgf/mm², in the case of a filament having a diameter of 0.36 ~ 0.45mm the tensile strength level is in the range of 250 ~ 335 kgf/mm². The filaments are stranded tightly and have relatively a small twist pitch to said filament diameter ratio so that the spaces between filaments are controlled to be relatively small.

## Description

The present invention relates to a tyre having a steel cord, which is applied to the carcass of a radial tyre for a passenger car and light truck. By using steel cord having an elongation characteristic which varies very little with stress and heat, the radial tyre to the carcass of which the said steel cord is applied can achieve a reduction in the fuel consumption rate, improvement in the handling property, enhancement in the dimensional stability and improvement in the tyre uniformity.

In general, for most belts used in a pneumatic radial tyre, steel cord formed by twisting several metal strips, namely steel filaments, is used, however, the cord used on the carcass is mostly made of polyester or rayon and partly of nylon.

The reason why polyester or rayon are used to make the cord for the carcass of tyre instead of the steel cord is that, even though the above cord made of polyester or rayon compares unfavorably with the steel cord in respect of the dimensional stability, thermal resistance and elasticity etc., they are more advantageous than the steel cord in the property of shock absorbing which is a defect of steel cord.

However, at present, since road conditions in all parts of the world have greatly improved, whereas the application of cord made of polyester or rayon to the carcass of the tyre for a passenger car in order to improve the riding property is becoming less significant, on the contrary, reduction in the fuel consumption rate, improvement in the handling property, enhancement in the dimensional stability and improvement in the tyre uniformity have remained in demand.

An object of the present invention is to solve the above problems, and is to provide a radial tyre for a passenger car and light truck which reduces the fuel consumption rate, improves the handling property, enhances dimensional stability and improves tyre uniformity, by replacing the cord applied to the carcass of the tyre with steel cord composed of variously stranded constructions.

According to the present invention there is provided a radial tyre for a passenger car and light truck to which a steel cord is applied to a carcass, wherein the steel cord used on the carcass is characterized in that it is formed by drawing a carbon steel filament wherein the content of carbon is 0.70 ∼ 0.96 weight % and plating brass on the surface of the filament (**1a**), and each filament prior to stranding into steel cord is such that in the case of a filament having a diameter of below 0.25mm the tensile strength level is in the range of 260 ∼ 375 kgf/mm², in the case of a filament having a diameter of 0.26 ∼ 0.35mm the tensile strength level is in the range of 250∼355 kgf/mm², in the case of a filament having a diameter of 0.36 ∼ 0.45mm the tensile strength level is in the range of 250 ∼ 335 kgf/mm², wherein the filaments are stranded tightly and have a relatively small twist pitch to said filament diameter ratio so that the spaces between filaments are controlled to be relatively small.

Examples of steel cords according to the invention will now be described with reference to the accompanying drawings, in which:-

FIG.1 is a plane view of a steel cord applied to a carcass according to the present invention.

FIG.2 is a cross-sectional view of FIG.1 taken along lines A-A.

FIG.3 through FIG.6 are other modified examples according to the present invention.

The steel cord according to the present invention is composed of a carbon steel wherein the content of carbon is 0.70 ∼ 0.96 weight % and of a filament **1a** the surface of which brass is plated, and prior to stranding into steel cord, in the case of a filament **1a** having a diameter of below 0.25mm the tensile strength level thereof is in the range of 260 ∼ 375kgf/mm², in the case of a filament **1a** having a diameter of 0.26 ∼ 0.35mm the tensile strength level is in the range of 250 ∼ 355 kgf/mm², in case of a filament **1a** having a diameter of 0.36 ∼ 0.45mm the tensile strength level is in the range of 250 ∼ 335 kgf/mm², wherein the filaments are stranded tightly and have relatively a small twist pitch to said filament diameter ratio so, the spaces between filaments are controlled relatively small.

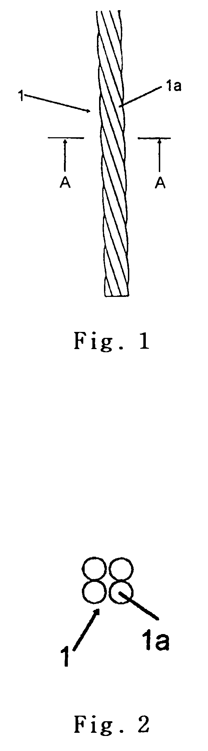

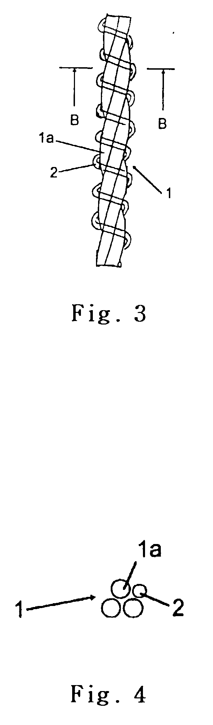

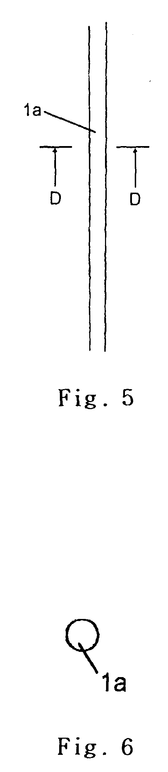

Furthermore, in the steel cord **1** according to the present invention, as shown in FIG. 1 through FIG. 6, the number of filament **1a** used can be varied, and according to the number, steel cord **1** formed by a single filament **1a** is indicated as 1, that formed by three strips of filament as 1 × 3 and that formed by four strips of filament as 1 × 4.

Herein, the relation between the diameter of the said filament **1a** (D, mm) and the twist pitch (P, mm) is described as follows.

In the case of a steel cord **1** composed of a single filament **1a**, D = 0.18 ∼ 0.45mm and P = ∞ (no twisting), in the case of a 1 × 3 + w steel cord (wherein w means a spiral wrap) having a spiral wrap 2 twisted helically D = 0.15 ∼ 0.30mm and P = 10D ∼ 60D and in the case that the twist pitch of the spiral wrap is 2 ∼ 7mm and of a 1 × 4 steel cord, D = 0.15 ∼ 0.32mm and P = 10D ∼ 60D.

In addition, by making relatively a small twist pitch to filament diameter ratio of the said 1 × 3 + w and 1 × 4 steel cords 1, the fatigue limit stress level of the cord in the completely reversed cycle of stress condition using rotating beam fatigue tester (RBT) becomes above 90 ∼ 100 kgf/mm2, and the range of flaring upon cutting the steel cord is lowered below 10mm and thereby, in the event that the said steel cord is applied to the carcass, the fatigue failure and phenomena of the cord unwinding caused by undergoing almost complete repetitive stress fatigue can be prevented. Furthermore, in the case of the said 1 × 4 steel cord 1, the elasticity of the steel cord by loop tester decreases slightly from 98 ∼ 100% to 90 ∼ 97%, and thereby not only is the turn-up property of the carcass in the building process of the tyre improved, but also the durability of the tyre is improved by decreasing the heat generation occurring during driving by decreasing the bending stiffness of the steel cord.

Furthermore, in the case of the said 1 × 3 + w and 1 × 4 steel cord 1, since the steel cord 1 with a low load range of 0.2 ∼ 1.6kgf, is characterized by an elongation in the range of below 0.30%, the handling property, dimensional stability and uniformity of the tyre can be improved.

Herein, Table 1 shows the physical properties according to the present invention and the values in parentheses represent the rubber coverage % after adhesion test, wherein for the steel cord **1** composed of single filament the diameter of the filament **1a** thereof is 0.30mm, for the 1 × 3 + w steel cord 1 the diameter of the filament 1 a thereof is 0.20mm, the twist pitch of three filaments thereof is 5.0mm and the twist pitch of the spiral wrap (2) thereof is 3mm, and for the 1 × 4 steel cord 1 the diameter of the filament 1a thereof is 0.20mm and the twist pitch of four filaments thereof is 7.0mm.

**TABLE 1**

| Item/ Classification | | | 1 | 1 × 3 + | 1 × 4 |
|---|---|---|---|---|---|
| Plating Characteristic | plating material (Cu, Zn (wt%)) | | 63.5, 36.5 | 63.4, 36.6 | 64.0, 36.0 |
| | plating thickness(pm) | | 0.25 | 0.21 | 0.22 |
| Mechanical Properties | Lay(twist) length(mm) | | | 5.0, 3.0 (wrapping) | 7.0 |
| | lay(twist) direction | | . | right, left (wrapping) | right |
| | diameter of filament(mm) | | 0.30 | 0.20 | 0.20 |
| | diameter of steel cord(mm) | | 0.30 | 0.44 | 0.49 |
| | breaking force(kgf) | | 22 | 29 | 37 |
| | elongation at break(%) | | 2.1 | 2.4 | 2.3 |
| | low load elongation (%) (0.2∼1.6kgf) | | below 0.02 | 0.071 | 0.087 |
| | linear density (g/m) | | 0.55 | 0.80 | 0.98 |
| | elasticity (%, by loop tester) | | 98 | 82 | 94 |
| | flare(mm, in the event of cutting) | | none | 2 | 3 |
| | bending stiffness (g-cm/a steel cord, by Taber stiffness tester) | | 15 | 17 | 18 |
| | antifatigue property (number of cycles, by RBT, applied stress 90 kgf/mm²) | | more than 1 million cycles | more than 1 million cycles | more than 1 million cycles |
| Rubber adhesion Force (kgf/0.5inch) (ASTM method) | initial (160mm x 20min) | | 17(100) | 29(95) | 35(95) |
| | heat aging(100°C) | 4 days | 20(95) | 28(95) | 34(95) |
| | | 8 days | 21(95) | 28(90) | 33(95) |
| | | 12 days | 18(90) | 27(90) | 32(90) |
| | humidity condition (70°C *96%R/H) | 4 days | 19(90) | 29(90) | 33(90) |
| | | 8 days 8 days | 17(90) | 28(90) | 32(90) |
| | | 12 days | 15(85) | 28(85) | 33(85) |
| | hot water condition (70°C) | 4 days | 16(90) | 28(90) | 32(90) |
| | | 8 days | 15(85) | 27(90) | 31(90) |
| | | 12 days | 14(80) | 28(90) | 31(90) |
| | salinity condition (20% NaCI) | 4 days | 20(80) | 28(80) | 30(75) |
| | | 8 days | 20(80) | 24(80) | 27(80) |
| | | 12 days | 18(75) | 22(75) | 25(75) |

As described above, by using steel cord having an elongation characteristic which varies very little with stress and heat on the carcass of a radial tyre for a passenger car and light truck, the present invention can have the effect of reducing the fuel consumption rate, improving the handling property, enhancing the dimensional stability and improving the uniformity of the tyre.

## Claims

1. A radial tyre for a passenger car and light truck to which a steel cord is applied to a carcass, wherein the steel cord used on the carcass is characterized in that it is formed by drawing a carbon steel filament wherein the content of carbon is 0.70 ∼ 0.96 weight % and plating brass on the surface of the filament (**1a**), and each filament prior to stranding into steel cord is such that in the case of a filament having a diameter of below 0.25mm the tensile strength level is in the range of 260 ∼ 375 kgf/mm², in the case of a filament having a diameter of 0.26 ∼ 0.35mm the tensile strength level is in the range of 250∼355 kgf/mm², in the case of a filament having a diameter of 0.36 ∼ 0.45mm the tensile strength level is in the range of 250 ∼ 335 kgf/mm², wherein the filaments are stranded tightly and have a relatively small twist pitch to said filament diameter ratio so that the spaces between filaments are controlled to be relatively small.

2. The radial tyre of claim 1, wherein the steel cord is characterized in that in the case of a steel cord **(1)** composed of a single filament (**1a**), the diameter D thereof is 0.18 ∼ 0.45mm, in the case of a 1 × 3 + w steel cord (1) the filament diameter D thereof is 0.15 ∼ 0.30mm, the twist pitch is 10D ∼ 60D and the twist pitch of the spiral wrap (2) is 2 ∼ 7mm and in the case of a 1 × 4 steel cord (1) the filament diameter D thereof is 0.15 ∼ 0.32mm and the twist pitch thereof is 10D ∼ 60D.
